(19) **Europäisches Patentamt**
**European Patent Office**
**Office européen des brevets**

(11) **EP 4 726 406 A1**

(12) **EUROPEAN PATENT APPLICATION**

(43) Date of publication:
**15.04.2026 Bulletin 2026/16**

(21) Application number: **25207533.8**

(22) Date of filing: **08.10.2025**

(51) International Patent Classification (IPC):
**G01R 31/367** (2019.01) **G06F 30/20** (2020.01)
**G06F 119/06** (2020.01) **G06F 111/10** (2020.01)

(52) Cooperative Patent Classification (CPC):
**G06F 30/20; G01R 31/367;** G06F 2111/10;
G06F 2119/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.10.2024 KR 20240138962**

(71) Applicants:
• **SAMSUNG SDI CO., LTD.**
**Yongin-si, Gyeonggi-do 17084 (KR)**
• **Chungbuk National University Industry-Academic**
**Cooperation Foundation**
**Cheongju-si, Chungcheongbuk-do 28644 (KR)**

(72) Inventors:
• **KWON, Tae-Ho**
**17084 Yongin-si, Gyeonggi-do (KR)**
• **CHO, Sungmin**
**17084 Yongin-si, Gyeonggi-do (KR)**
• **BAEK, Donkyu**
**30146 Sejong-si (KR)**
• **KIM, Minsu**
**28666 Cheongju-si, Chungcheongbuk-do (KR)**
• **LEE, Yunji**
**28664 Cheongju-si, Chungcheongbuk-do (KR)**

(74) Representative: **Bardehle Pagenberg**
**Partnerschaft mbB**
**Patentanwälte Rechtsanwälte**
**Prinzregentenplatz 7**
**81675 München (DE)**

(54) **DEVICE AND METHOD FOR BUILDING A BATTERY MODEL**

(57)   The present disclosure relates to a device and method for building a battery model. In some embodiments, a battery simulation device includes a control device configured to: generate a battery model simulating a target battery; perform a fist charging simulation of the battery model at a first charging rate to set a plurality of capacitive parameters among a plurality of parameters configuring the battery model; and perform a second charging simulation of the battery model at a second charging rate different from the first charging rate to set a plurality of resistive parameters among the plurality of parameters.

FIG. 5

S1

Start

Generate battery model — S11

Set optimization process — S12

Start optimization process — S13

Generate population — S14

Perform charging simulation — S15

Calculate fitness score — S16

Is preset limit condition satisfied? — S17

No

Yes

Set internal parameter — S18

Output optimization result — S19

End

**EP 4 726 406 A1**

**Description**

**BACKGROUND**

**1. Field**

The present disclosure relates to a device and method for building a battery model.

**2. Description of the Related Art**

A rechargeable battery is a battery that may be charged and discharged, unlike a primary battery that may not be charged. Low-capacity rechargeable batteries are used in portable small electronic devices such as smartphones, feature phones, laptop computers, digital cameras, and camcorders, and large-capacity rechargeable batteries are widely used as motor driving power and power storage devices such as hybrid vehicles and electric vehicles. The rechargeable battery includes an electrode assembly including a positive electrode and a negative electrode, a case accommodating the electrode assembly, and an electrode terminal connected to the electrode assembly.

In general, the secondary battery includes an electrode assembly including a positive electrode, a negative electrode, and a separator interposed between the positive and negative electrodes; a case accommodating the electrode assembly; and an electrode terminal electrically connected to the electrode assembly. An electrolyte solution is injected into the case to enable charging and discharging of the battery through an electrochemical reaction between the positive electrode, the negative electrode, and the electrolyte solution. The shape of the case, such as a cylindrical or rectangular shape, varies depending on the purpose of the battery.

A battery modeling-based simulation technique may be used to evaluate the characteristics of rechargeable batteries. The simulation technique may include building a battery model to simulate the charging phenomenon of the target battery and evaluate the characteristics of the target battery using the built battery model. It may be desirable to improve the reproducibility and consistency of the battery model that is built by the simulation technique.

The above information disclosed in this background section is only for enhancement of understanding of the background of the disclosure, and therefore it may contain information that does not form the prior art that is already known in this country to a person of ordinary skill in the art.

**SUMMARY**

The present disclosure is directed a device and method for building a battery model according to the independent claims. Various embodiments are disclosed in dependent claims. According to the present invention, the time required to build the battery model may be reduced and/or the reproducibility and consistency of the battery model used in simulation will be improved.

However, the technical problem to be solved by the present disclosure is not limited to the above, and other objects not mentioned herein will be understood from the following description by those skilled in the art.

An embodiment of the present disclosure provides a battery simulation device including a control device configured to: generate a battery model simulating a target battery; perform a first charging simulation of the battery model at a first charging rate to set a plurality of capacitive parameters among a plurality of parameters configuring the battery model; and perform a second charging simulation of the battery model at a second charging rate different from the first charging rate to set a plurality of resistive parameters among the plurality of parameters.

The control device may be further configured to: generate a plurality of parameter value sets including parameter values of the plurality of parameters; perform a third charging simulation of the battery model using each parameter value set of the plurality of parameter values sets; compare a result of the third charging simulation obtained using each parameter value set of the plurality of parameter values sets with charging experiment data of the target battery to calculate a fitness score of each parameter value set; and determine selected parameter values of the plurality of parameters based on the fitness score.

The control device may be further configured to generate the plurality of parameter value sets using a genetic algorithm.

The control device may be further configured to calculate the fitness score using a cost function. The cost function may include as variables at least one of a voltage error during a span of a charging period, a constant current charging time error, a voltage error during an initial charging period, a current error during a constant voltage charging period, a charging starting voltage error, or a lithium ion concentration error in a negative electrode.

The control device may be further configured to generate a plurality of first parameter value sets corresponding to the plurality of parameters based on parameter values of the plurality of resistive parameters being fixed, and determine a selected parameter value of at least one of the plurality of capacitive parameters using a first selected parameter value set selected from the plurality of first parameter value sets. The control device may be further configured to generate a plurality of second parameter value sets corresponding to the plurality of parameters based on parameter values of the plurality of capacitive parameters being fixed using the first selected parameter value set, and determine an selected parameter value of the plurality of resistive parameters using a second selected parameter value set selected from the plurality of second parameter value sets.

The plurality of capacitive parameters may include a maximum lithium ion amount in a positive electrode and a maximum lithium ion amount in a negative electrode. The plurality of resistive parameters may include a conductivity, a reaction rate in the positive electrode, and a reaction rate in the negative electrode.

The plurality of parameters may further include a starting voltage of the positive electrode and a starting voltage of the negative electrode. The control device may be further configured to determine selected parameter values of the starting voltages of the positive electrode and the negative electrode based on performing a charging simulation of the battery model at the first charging rate.

The control device may be further configured to: determine theoretical values of the maximum lithium ion amount in the positive electrode and the maximum lithium ion amount in the negative electrode based on design information of the target battery; determine a search range based on the theoretical values; and determine values of the maximum lithium ion amount in the positive electrode and the maximum lithium ion amount in the negative electrode included in the plurality of parameter value sets within the search range.

The control device may be further configured to limit a value of the reaction rate in the positive electrode according to a value of the reaction rate in the negative electrode when generating the plurality of parameter value sets.

The control device may be further configured to: generate a plurality of first parameter value sets; perform charging simulations of the battery model at the first charging rate and the second charging rate under a first temperature condition to determine a first selected parameter value set among the plurality of first parameter value sets; and determine selected parameter values of the plurality of parameters corresponding to the first temperature condition using the first selected parameter value set.

The control device may be further configured to: generate a plurality of second parameter value sets based on fixing parameter values of the plurality of capacitive parameters using the first selected parameter value set; perform charging simulations of the battery model at the first charging rate and the second charging rate under a plurality of different temperature conditions to calculate a fitness score for each of the plurality of second parameter value sets; derive a function model representing a temperature trend of each of the plurality of resistive parameters using the plurality of second parameter value sets; calculate a temperature trend fitness score of each of the plurality of second parameter value sets using the function model; and determine selected parameter values of the plurality of parameters corresponding to each of a plurality of temperature conditions based on the fitness score and the temperature trend fitness score.

Another embodiment of the present disclosure provides a method for building a battery model for a battery simulation device, including: generating a battery model including a plurality of parameters by simulating a target battery; selecting a plurality of capacitive parameters, a starting voltage of a positive electrode, and a starting voltage of a negative electrode among the plurality of parameters by performing a first charging simulation of the battery model at a first charging rate; and selecting a plurality of resistive parameters among the plurality of parameters by performing a second charging simulation of the battery model at a second charging rate different from the first charging rate.

The selecting of the plurality of capacitive parameters, the starting voltage of the positive electrode, and the starting voltage of the negative electrode includes: generating a plurality of first parameter value sets corresponding to the plurality of parameters; performing the first charging simulation based on changing parameter values of the plurality of parameters using the plurality of first parameter value sets; comparing a result of the first charging simulation corresponding to each of the plurality of first parameter value sets with charging experiment data of the target battery to select a first selected parameter value set from among the plurality of first parameter value sets; and determining selected parameter values of the plurality of capacitive parameters, the starting voltage of the positive electrode, and the starting voltage of the negative electrode using the first selected parameter value set..

The optimizing of the plurality of resistive parameters may include: generating a plurality of second parameter value sets corresponding to the plurality of parameters based on fixing parameter values of the plurality of capacitive parameters, the starting voltage of the positive electrode, and the starting voltage of the negative electrode using the first selected parameter value set; performing the second charging simulation based on changing parameter values of the plurality of parameters using the plurality of second parameter value sets; comparing a result of the second charging simulation corresponding to each of the plurality of second parameter value sets with charging experiment data of the target battery to select a second selected parameter value set from among the plurality of second parameter value sets; and determining selected parameter values of the plurality of resistive parameters using the second selected parameter value set.

The first charging rate may be lower than the second charging rate.

The generating of the plurality of first parameter value sets and the generating of the plurality of second parameter value sets may be performed using a genetic algorithm.

The selecting of the first selected parameter value set and the selecting of the second selected parameter value set may be performed using a cost function. The cost function may include as variables a voltage error during a span of a charging period, a constant current charging time error, a voltage error during an initial charging period, a current error during a constant voltage charging period, a charging starting voltage error, and a lithium ion concentration error in a negative electrode.

The plurality of capacitive parameters may include a maximum lithium ion amount in a positive electrode and a maximum lithium ion amount in a negative electrode. The plurality of resistive parameters may include a conductivity, a reaction rate in the positive electrode, and a reaction rate in the negative electrode.

Another embodiment of the present disclosure provides a method for building a battery model for a battery simulation device, including: generating a battery model including a plurality of parameters by simulating a target battery; generating a plurality of first parameter value sets corresponding to the plurality of parameters; performing a first charging simulation of the battery model under a first temperature condition based on changing parameter values of the plurality of parameters using the plurality of first parameter value sets; determining a first selected parameter value set corresponding to the first temperature condition among the plurality of first parameter value sets based on a result of the first charging simulation; generating a plurality of second parameter value sets corresponding to the plurality of parameters based on fixing parameter values of a plurality of capacitive parameters among the plurality of parameters using the first selected parameter value set; performing a second charging simulation of the battery model under a plurality of temperature conditions different from the first temperature condition based on changing parameter values of the plurality of parameters using the plurality of second parameter value sets; and determining a second selected parameter value set corresponding to each of the plurality of temperature conditions among the plurality of second parameter value sets based on a result of the second charging simulation.

The determining of the second selected parameter value set may include comparing the result of the second charging simulation with charging experiment data of the target battery to select a plurality of third parameter value sets from among the plurality of second parameter value sets; deriving a temperature trend function model of each of a plurality of resistive parameters from among the plurality of parameters using the plurality of third parameter value sets; calculating a temperature trend fitness score of each of the plurality of third parameter value sets using the temperature trend function model; and determining the second selected parameter value set corresponding to each of the plurality of temperature conditions from among the plurality of third parameter value sets based on the temperature trend fitness score.

According to the present disclosure, it is possible to reduce the time required to build the battery model based on ensuring the reproducibility and consistency of the battery model.

However, effects obtainable through the present disclosure are not limited to the above, and other effects not mentioned herein will be clearly understood by those skilled in the art from the following disclosure.

## BRIEF DESCRIPTION OF THE DRAWINGS

The accompanying drawings illustrate one or more embodiments of the present disclosure and together with the foregoing disclosure, serve to provide further understanding of the technical features of the present disclosure, and thus, the present disclosure is not construed as being limited to the drawing.

FIG. 1 schematically illustrates a battery simulation device according to an embodiment.
FIG. 2A depicts a graph of an example voltage profile of a target battery and a battery model.
FIG. 2B depicts a graph of an example current profile of a target battery and a battery model.
FIG. 2C depicts a graph of an example lithium ion profile of a target battery and a battery model.
FIG. 3A depicts a graph of an example temperature trend model of conductivity.
FIG. 3B depicts a graph of an example temperature trend model of a reaction rate in a positive electrode.
FIG. 3C depicts a graph of an example temperature trend model of a reaction rate in a negative electrode.
FIG. 4 depicts a flow diagram of a battery simulation method according to an embodiment.
FIG. 5 depicts a flow diagram of a method for building a battery model according to an embodiment.
FIG. 6 depicts another flow diagram of a method for building a battery model according to an embodiment.
FIG. 7 depicts an additional flow diagram of a method for building a battery model according to an embodiment.

## DETAILED DESCRIPTION

Hereinafter, embodiments of the present disclosure will be described in detail with reference to the accompanying drawings. Prior to description, it should be understood that terms and words used in the specification and the appended claims should not be construed to be limited to common and dictionary meanings, but should be interpreted as having meanings and concepts corresponding to technical ideas of the present disclosure in view of the principle that the inventor may be his or her own lexicographer to properly define the concepts of the terms and words in order to describe his/her own invention as best as possible. Accordingly, since the embodiment described in the specification and the configurations shown in the drawings are merely embodiments and configurations of the present disclosure, they do not represent all of the technical ideas of the present disclosure, and it should be understood that that various equivalents and modified examples, which may replace the embodiments, are possible when filing the present application. It will be further understood that the terms "comprise, include," "comprising," and/or "including," when used in this specification, specify the presence of the stated features, integers, steps, operations, elements, and/or components but do not preclude the presence or addition of one or more other features, integers, steps, operations, elements, components, and/or groups thereof. The use of "can/may" in describing an embodiment of the present disclosure may include "one or more embodiments of the present disclosure."

In addition, in order to help the understanding of the present disclosure, the accompanying drawings are not drawn to scale, and the dimensions of some components may be exaggerated. In addition, the same reference numerals may be assigned to the same elements in different embodiments.

When it is explained that two objects are 'identical', this means that these objects are 'substantially identical'. Accordingly, the substantially identical objects may include deviations considered low in the art, for example, deviations within 5%. In addition, when it is explained that certain parameters are uniform in a predetermined region, this may mean that the parameters are uniform in terms of an average in the corresponding region.

Although the terms "first", "second", and the like are used to describe various constituent elements, these constituent elements are not limited by these terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

In addition, when an element is referred to as being "connected", "coupled" or "linked" to another element, the element can be directly connected or coupled to the other element, but it should be understood that intervening elements may be present between each element, or each element may be "connected", "coupled" or "linked" to each other through another element. When one element is referred to as being coupled (e.g., electrically coupled or connected) to another element, the one element may be directly coupled to the another element or indirectly coupled to the another element via one or more intervening elements.

Throughout the specification, unless stated otherwise, "A and/or B" refers to A, B, or A and B. In other words, the term "and/or" includes all or various combinations of a plurality of items that are related and arranged. "C to D" refers to C or greater and D or smaller, unless stated otherwise.

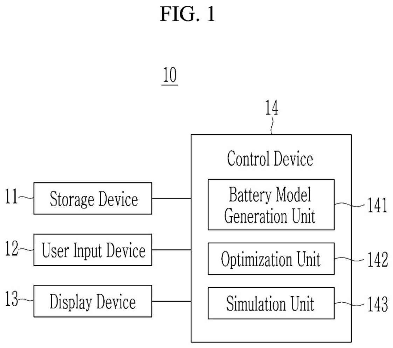

FIG. 1 schematically illustrates a battery simulation device according to an embodiment.

Referring to FIG. 1, a battery simulation device 10 may include a storage device 11, a user input device 12, a display device 13, and a control device 14.

The storage device 11 may store various types of information and data processed by the battery simulation device 10.

For example, the storage device 11 may store charging experimental data. The charging experimental data may include experimental data obtained through a charging experiment of a target battery. The charging experiment data may include a voltage profile, a current profile, a capacity-voltage profile, and/or the like. The voltage profile may include a record of the voltage change of the target battery over time, and may be obtained by recording the voltage of the target battery measured periodically (e.g., on a regular or irregular basis) during the charging experiment in a time series (e.g., over time). The current profile may include a record of the current change of the target battery over time, and may be obtained by recording the charging current of the target battery measured periodically (e.g., on a regular or irregular basis) during the charging experiment in a time series (e.g., over time). The capacity-voltage profile may be obtained by recording the voltage change according to a state of charge (SOC) of the target battery.

The storage device 11 may map and store corresponding charging experimental data for one or more different charging rates (for example, 0.1C, 1C, 1.3C, 1.5C, 2.5C, and the like). In some embodiments, the storage device 11 may map and store charging experimental data obtained by performing a charging experiment at the corresponding charging rate for one or more (e.g., each) charging rate.

The storage device 11 may map and store corresponding charging experimental data for a plurality of different temperature conditions (for example, - 20°C, -10°C, 0°C, 10°C, 25°C, 45°C, 50°C, and the like). In some embodiments, the storage device 11 may map and store charging experimental data obtained by performing a charging experiment under the corresponding temperature condition for one or more (e.g., each) temperature condition.

The storage device 11 may also store a battery model for simulating the target battery. The battery model may include an electrochemical model of the battery, and may include a virtual battery simulation model that electrochemically simulates phenomena within the battery (such as lithium entry or exit into or out of the active electrode material, diffusion in the solid matrix, and transport in the electrolyte).

The battery model may include a plurality of design parameters and a plurality of internal parameters.

The plurality of design parameters may include parameters set by the design information or form factor of the battery, and may not be changed in the optimization process to be described later. The design parameters may include the composition, width, thickness, capacity, and the like of the electrode plates.

The plurality of internal parameters may include parameters representing the electrochemical characteristics of the battery, and their values may be determined through the optimization process to be described later. The plurality of internal parameters may include capacitive parameters (maximum lithium ion amount in a positive electrode (cathode) and maximum lithium ion amount in a negative electrode (anode)). The maximum lithium ion amount of the positive and negative electrodes may represent the maximum lithium ion concentrations allowed in the positive and negative electrodes. The plurality of internal parameters may include resistive parameters (conductivity such as ionic conductivity and/or electrical conductivity, reaction rate of positive electrode, and reaction rate of negative electrode). The plurality of internal parameters may include a starting voltage of the positive electrode and a starting voltage of the negative electrode. The starting voltages of the positive and negative electrodes may represent voltages (or potentials) of the positive and negative electrodes at the start of charging or when the SOC of the battery is 0%.

The battery model may be configured to simulate the charging characteristics of the battery according to the set values of the internal parameters and output the simulation results (output parameters). The plurality of output parameters may include parameters representing the charging characteristics of the battery. The plurality of output parameters output as simulation results of the battery model may include a voltage profile, a current profile, and lithium ion profiles of the positive electrode and the negative electrode. The voltage profile may represent changes in battery voltage over time. The current profile may represent changes in charging current over time. The lithium ion profiles of the positive electrode and the negative electrode may represent changes in the lithium ion concentration in the positive electrode and the negative electrode over time.

The battery model may be fitted to represent the electrochemical characteristics of the target battery through an optimization process that optimizes the internal parameters. For example, one or more (e.g., each) internal parameter of the battery model may be set or modified through the optimization process.

The user input device 12 may receive user inputs for building the battery model and performing battery simulation. The user input device 12 may receive information (for example, design information) for generating the battery model. The user input device 12 may also receive setting information for the optimization process. The setting information for the optimization process may include setting information about limit conditions, search methods, and the like.

The limit conditions of the optimization process may include conditions for limiting the execution time of the optimization process, such as a maximum search time (run time), a maximum number of searches, and a target fitness score (target cost). The maximum search time may be a value for limiting the search time of the optimization process. The maximum number of searches may include a value for limiting the number of search iterations of the optimization process. The target fitness score (target cost) may be a fitness score (cost) that serves as a criterion for terminating the search of the optimization process. The limit conditions may further include a search range for one or more (e.g., each) internal parameter. The search range may represent the range of parameter values for the corresponding internal parameter and may include upper and/or lower limits.

The setting information for the search method of the optimization process may include a search order, a charging rate during the search, a charging rate during verification, and the like. The search order may include information for selecting which of the internal parameters is to be searched first. For example, the search order may be set to fit capacitive parameters through low rate (charging rate of 0.5C or less) charging and then fit the remaining parameters (resistive parameters, starting voltages of the positive and negative electrodes) through high rate (charging rate of 1.0 or greater) charging. In some embodiments, the search order may be set to fit all internal parameters simultaneously or concurrently. The charging rate during search and the charging rate during verification may be include information for selecting the charging rate during the search process for searching for the value of the internal parameter and the verification process for verifying the fitted internal parameter value through the search.

The user input device 13 may also include a control input (for example, a simulation condition, a simulation start command, a simulation end command, or the like) for controlling the battery simulation.

The display device 13 may visually output various data and information processed by the battery simulation device 10. The display device 13 may display a user interface (UI) screen for receiving setting information for the optimization process. The display device 13 may also display a result screen of the optimization process. In some embodiments, the display device 13 may display a user interface screen for receiving control information for battery simulation control. The display device 13 may also display a result screen of the battery simulation.

The control device 14 may control the overall operation of the battery simulation device 10. The control device 14 may include a battery model generation unit 141, an optimization unit 142, and a simulation unit 143.

The battery model generation unit 141 may generate a battery model by modeling the electrochemical characteristics of the target battery. The battery model generation unit 141 may generate the battery model using numerical models or electrochemical models such as the Newman model. Upon initial generation of the battery model, the battery model generation unit 141 may generate the battery model such that the internal parameters of the battery model have default values. The default values may include theoretical values calculated based on the design information of the target battery. The battery model generation unit 141 may receive the design information of the target battery through the user input device 12 and generate the battery model based on the received information.

The battery model generation unit 141 may store the generated battery model in the storage device 11 after the battery model is generated.

The optimization unit 142 may perform an optimization process of fitting internal parameter values to selected (e.g., optimal) values so that the battery model has charging characteristics similar to those of the target battery.

The optimization unit 142 may perform the optimization process using a genetic algorithm (GA). The genetic algorithm may include an algorithm that generates (e.g., randomly) a population (e.g., group of solutions) for a given problem and then evolves this population to find the optimal solution (e.g., a solution that satisfies a criterion such as a threshold fitness score).

The optimization unit 142 may generate a population using the genetic algorithm. The population may include a plurality of parameter value sets, one or more (e.g., each) of which may include parameter values for one or more (e.g., each) of all internal parameters.

The optimization unit 142 may generate (e.g., randomly) parameter value sets when the population is first generated, such as, for example, when the first generation of the population is generated. If a search range for one or more (e.g., each) internal parameter is set, the optimization unit 142 may generate parameter value sets within the set search range.

Once the population is generated, the optimization unit 142 may calculate a fitness score for one or more (e.g., each) parameter value set included in the population. The optimization unit 142 may set the internal parameters of the battery model using one or more (e.g., each) parameter value set and perform a charging simulation using the battery model set in this manner. Subsequently, the optimization unit 142 may determine the fitness score of the corresponding parameter value set by comparing the charging simulation results with charging experimental data obtained through actual experiments.

The fitness score for one or more (e.g., each) parameter value set may be calculated using a cost function. Equation 1 is an example cost function for calculating the fitness score according to one or more embodiments:

$$\text{total\_cost} = a \times (\text{total\_vol\_err}) + b \times (\text{CC\_time\_err}) + c \times (\text{early\_vol\_err}) + d \times (\text{CV\_curr\_err}) + e \times (\text{init\_vol\_err}) + f \times (\text{anode\_ion\_err}) \qquad \text{Equation 1}$$

Referring to Equation 1 above, the cost function may include six variables, although embodiments are not limited thereto, and may include less or more than six variables. Here, total_vol_err may represent a battery voltage error during a span of a charnging period such as, for example, the entire charging period. CC_time_err may represent an error in the constant current charging time. Early_vol_err may represent a battery voltage error during the initial charging period. CV_curr_err may represent a current error during the constant voltage charging period. Init_vol_err may represent a battery voltage error at the start of the charging period or when the SOC is 0%. Anode_ion_err may represent an error in lithium ion concentration in the negative electrode.

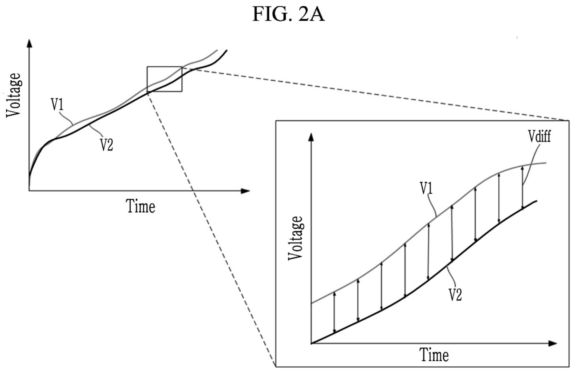

Hereinafter, variables used in the cost function and methods for calculating errors thereof will be described with reference to FIG. 2A to FIG. 2C.

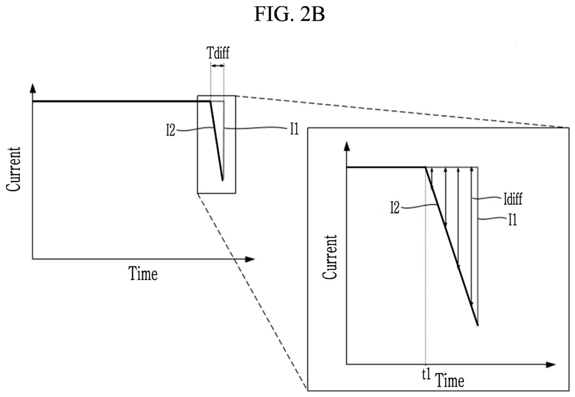

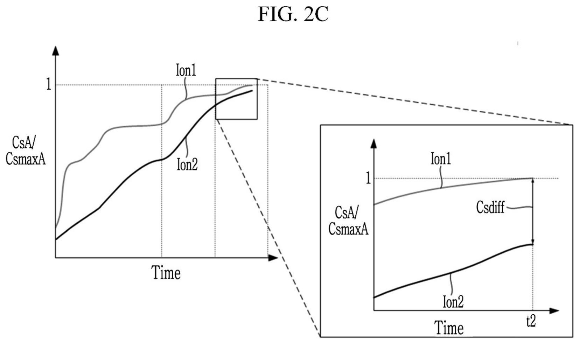

FIG. 2A depicts a graph of an example voltage profile of a target battery and a battery model. FIG. 2B depicts a graph of an example current profile of a target battery and a battery model. FIG. 2C depicts a graph of an example lithium ion profile of a target battery and a battery model.

In FIG. 2A, a voltage profile V1 is a voltage profile obtained through charging experiments of the target battery, and a voltage profile V2 is a voltage profile obtained through charging simulation of the battery model.

Referring to FIG. 2A, the optimization unit 142 may accumulate and add up the voltage difference Vdiff between the two voltage profiles V1 and V2 across a charging period (e.g., the entire charging period), and use the accumulated and added voltage difference across the charging period (e.g., the entire charging period) to determine a 'total_vol_err' of the aforementioned cost function. The optimization unit 142 may accumulate and add up the voltage difference Vdiff between the two voltage profiles V1 and V2 during the initial charging period (for example, a period within 5000 seconds from the start of charging) and use the accumulated and added voltage difference during the initial charging period to determine 'early_vol_err' of the aforementioned cost function. The optimization unit 142 may use the absolute value of the voltage difference Vdiff when accumulating and adding the voltage difference Vdiff.

The optimization unit 142 may also determine 'init_vol_err' of the aforementioned cost function using the voltage difference Vdiff at the start of charging of the voltage profiles V1 and V2.

In FIG. 2B, a current profile I1 is a current profile obtained through charging experiments of the target battery, and a current profile I2 is a current profile obtained through charging simulation of the battery model.

Referring to FIG. 2B, the optimization unit 142 may detect time points at which constant current charging ends in the current profiles I1 and I2, respectively. Then, the optimization unit 142 may calculate the time difference Tdiff between the two end time points and use the calculated time difference Tdiff to determine 'CC_time_err' of the aforementioned cost function.

The optimization unit 142 may accumulate and add the current difference Idiff between the two current profiles I1 and I2 during the constant voltage charging period, and may use the accumulated and added current difference during the constant voltage charging period to determine the 'CV_curr_err' of the aforementioned cost function. The optimization unit 142 may also use the absolute value of the current difference Idiff when accumulating and adding the current difference Idiff. In some embodiments, in order to resolve the scale deviation according to the charging rate or maximum charging current (charging current in the constant current charging period), the optimization unit 142 may divide the accumulated and added current difference Idiff by the charging rate or maximum charging current to correct it, and use the corrected added value to determine the 'CV_curr_err' of the cost function.

As shown in FIG. 2B, the time points at which the constant voltage charging period starts may be different in the two current profiles I1 and I2. In this case, the optimization unit 142 may determine the "CV_curr_err" based on the constant voltage charging period that starts first among the current profiles I1 and I2. For example, in FIG. 2B, the optimization unit 142 may accumulate and add up the current difference Idiff from the constant voltage charging start time point t1 of the current profile I2, and use the accumulated and added up current difference to determine the "CV_curr_err".

In FIG. 2C, the lithium ion profile Ion1 is the lithium ion profile of the target battery, and the lithium ion profile Ion2 is the lithium ion profile obtained through charging simulations of the battery model. The lithium ion profiles Ion1 and Ion2 may represent the change in lithium ion concentration CsA over time in the negative electrode. To resolve the scale deviation according to the maximum lithium ion amount CsmaxA, the lithium ion profiles Ion1 and Ion2 may be corrected by dividing them by the maximum lithium ion amount CsmaxA, as shown in FIG. 2C. Here, the maximum lithium ion amount CsmaxA represents the maximum lithium ion concentration in the negative electrode.

Referring to the lithium ion profile Ion1 of FIG. 2C, the amount of lithium ions CsA in the negative electrode of the target battery at the full-charging time point t2 may have a value close to the maximum amount of lithium ions CsmaxA in the negative electrode of the target battery. Therefore, the lithium ion profile value CsA/CsmaxA at the full-charging time point t2 of the target battery may be assumed to be 1 (or 100%).

The optimization unit 142 may obtain the lithium ion profile value CsA/CsmaxA corresponding to the full-charging time point t2 of the target battery from the lithium ion profile Ion2 obtained through simulation. Then, the optimization unit 142 may calculate the difference value Csdiff between the obtained lithium ion profile value CsA/CsmaxA and the lithium ion profile value CsA/CsmaxA at the full-charging time point t2 of the target battery, that is, 1 (or 100%), and use the calculated difference value Csdiff to determine the "anode_ion_err" of the aforementioned cost function.

As described above, the lower the fitness score calculated using the cost function, the better the fitness of the corresponding parameter value set.

Referring back to FIG. 1, when the fitness score of one or more (e.g., each) parameter value set is calculated using the cost function, the optimization unit 142 may correct the calculated fitness score. In some embodiments, the optimization unit 142 may correct the fitness score so that the fitness score of one or more (e.g., each) parameter value set is included within a useful or identified range.

Once the fitness score of one or more (e.g., each) parameter value set is determined, the optimization unit 142 may use this to select a parameter value set to be included in the next generation population from the current generation population. The optimization unit 142 may select a parameter value set with a minimum fitness score among the parameter value sets included in the current generation population as an elite or selected solution, and may include the parameter value set selected as the elite or selected solution in the next population without change.

In some embodiments, the optimization unit 142 may use mutation and crossover methods to generate new sets of parameter values to be included in the next generation population. The mutation method is a method that changes (e.g., randomly changes) parameter value sets included in the current generation population to generate parameter value sets for the next generation. The crossover method is a method that combines vector items of two parameter value sets selected from the current generation population to generate parameter value sets for the next generation.

When the next generation population is generated, the optimization unit 142 may replace the current generation population with that population. Then, the optimization unit 142 may repeat the process of calculating the fitness score of one or more (e.g., each) parameter value set and generating the next generation population.

The optimization unit 142 may repeat the search process (calculating fitness scores, generating the next generation population) using a genetic algorithm until a predetermined or identified limit condition is satisfied. If the time spent searching for parameter values using the genetic algorithm is greater than or equal to the maximum search time, the optimization unit 142 may stop generating new populations and terminate the search. When the number of times (the number of times of newly generating a population) of repeating the search process using the genetic algorithm is greater than or equal to the maximum number of searches, the optimization unit 142 may end the search without generating additional new populations. If a parameter value set in which a fitness score (cost) is less than or equal to the target fitness score (target cost) among the parameter value sets included in the population exists, the optimization unit 142 may end the search without generating additional new populations.

When the search process is completed, the optimization unit 142 may determine a global minimum among the parameter value sets generated in the search process. The optimization unit 142 may determine a parameter value set with the lowest fitness score (cost) among the parameter value sets as the global minimum.

If the parameter value set that is the global minimum is determined, the optimization unit 142 may set the internal parameter value of the battery model using the corresponding parameter value set and terminate the optimization process.

The optimization unit 142 may shorten the time required for the optimization process in various ways.

The genetic algorithm may derive (e.g., quickly derive) the best cost as the search range is narrower. Accordingly, the optimization unit 142 may shorten the time required for the optimization process by narrowing the parameter value search range of one or more (e.g., each) internal parameter.

A theoretical value for the maximum lithium ion amounts in the positive and negative electrodes of the target battery may be derived based on the design information of the target battery. The optimization unit 142 may reduce the search range of the maximum lithium ion amounts in the positive and negative electrodes based on the theoretical value derived based on the design information. The theoretical values of the maximum lithium ion amounts in the positive and negative electrodes may be input from the user through the user input device 12. The theoretical values of the maximum lithium ion amounts in the positive and negative electrodes may also be automatically calculated by the optimization unit 142 based on the design information of the target battery.

In some embodiments, the optimization unit 142 may reduce the search range of the reaction rate in the negative electrode based on a correlation between the reaction rate in the negative electrode and the reaction rate in the positive electrode. For example, when the reaction rate in the negative electrode included in one or more (e.g., each) parameter value set is determined when generating the population, the optimization unit 142 may limit the value of the reaction rate in the positive electrode according to the correlation between the reaction rate in the negative electrode and the reaction rate in the positive electrode. The correlation between the reaction rate in the negative electrode and the reaction rate in the positive electrode may vary depending on the battery type. For example, in an NCM battery using nickel (Ni), cobalt (Co), and manganese (Mn) as positive electrode materials, the reaction rate in the negative electrode may have a value of 1 to 2 times or less than the cathode reaction rate. Therefore, in the case of NCM batteries, the optimization unit 142 may limit the reaction rate in the negative electrode included in one or more (e.g., each) parameter value set to be 1 time or more and 2 times or less than the reaction rate in the positive electrode when generating the population. For example, in an LFP battery using lithium (Li) and iron phosphate (FePO4) as positive electrode materials, the reaction rate in the negative electrode may be equal to or greater than 1 time and equal to or less than 11 times the positive electrode rate. Therefore, in the case of LFP batteries, the optimization unit 142 may limit the reaction rate in the negative electrode included in one or more (e.g., each) parameter value set to be 1 time or more and 11 times or less than the reaction rate in the positive electrode when generating the population.

The genetic algorithm may derive (e.g., quickly derive) the best cost as the number of search targets is smaller. Therefore, the optimization unit 142 may shorten the search time by dividing the internal parameters and performing the search over a plurality of steps. For example, where there are 7 internal parameters of a battery model and 10 parameter values are given in the search range, the number of parameter values to be searched becomes $10^7$ when all internal parameters are searched simultaneously. On the other hand, if the search is performed for four internal parameters first and then for the remaining three internal parameters, the number of parameter value sets to be searched is reduced to ($10^4$ + $10^3$). The reduction of search parameters provides a technical improvement in the function of the computer that performs the search because hardware resources of the computer may be saved due to the reduction of the search parameters.

Due to the characteristics of lithium ion batteries, the charging characteristics may be affected by the capacitive parameters (the maximum lithium ion amounts in the positive and negative electrodes) at low rate charging, and may be affected by the resistive parameters (conductivity (ionic conductivity and/or electrical conductivity), reaction rates in positive and negative electrodes) at high (e.g., above a threshold) rate charging. Therefore, in the first step, the optimization unit 142 may search for parameter values of the capacitive parameters, the starting voltages of the positive and negative electrodes by performing a charging simulation at a low rate (for example, 0.1C) based on (e.g., while) fixing the resistive parameter values of the battery model. Then, in the second step, the optimization unit 142 may search for the parameter values of the remaining resistive parameters by performing the charging simulation at a high rate (for example, 1.0C) based on (e.g., while) fixing the capacitive parameters, the starting voltages of the positive and negative electrodes to the parameter values fitted in the first step.

Among the internal parameters of the battery model, the resistive parameters, such as the conductivity (ionic conductivity and/or electrical conductivity), the reaction rates in the positive and negative electrodes, show a trend according to temperature. If the internal parameters of the battery model need to be fitted for multiple temperature conditions, the optimization unit 142 may determine the internal parameter values of the battery model using this temperature trend.

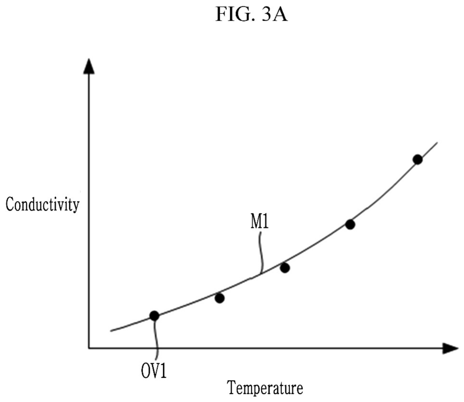

Hereinafter, with reference to FIG. 3A to FIG. 3C, a method for determining the internal parameter values of the battery model using the temperature trend of the resistive parameters will be described.

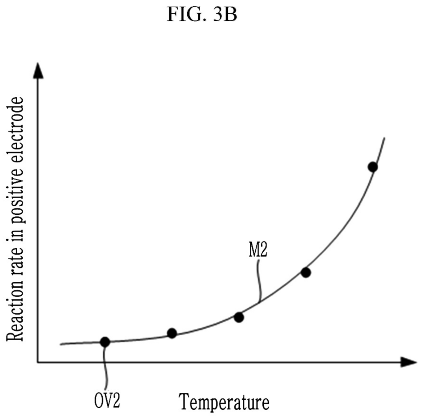

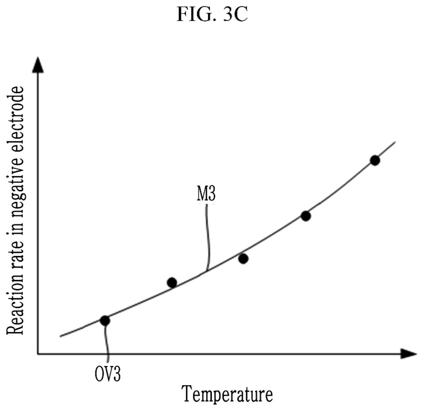

FIG. 3A depicts a graph of an example temperature trend model of conductivity, FIG. 3B depicts a graph of an example temperature trend model of a reaction rate in the positive electrode, and FIG. 3C depicts a graph of an example temperature trend model of a reaction rate in the negative electrode.

First, the optimization unit 142 may perform a charging simulation under room temperature conditions (for example, 25°C) and search for a selected parameter value set of internal parameters corresponding to the room temperature conditions, that satisfy a criterion (e.g., an optimal parameter value set). For example, the search for the optimal parameter value set may be performed in the same manner as the aforementioned optimization process.

Subsequently, the optimization unit 142 may perform an optimization process for searching for the optimal parameter value set for additional temperature conditions other than the room temperature condition. During the optimization process for the additional temperature conditions, the parameter values of the capacitive parameters (maximum lithium ion amounts in positive and negative electrodes), the starting voltage of the positive and negative electrodes may be fixed to the fitted values for the first temperature condition. For example, the optimization unit 142 may generate a population by changing only the parameter values of the resistive parameters (conductivity (ionic conductivity and/or electrical conductivity), reaction rates in positive and negative electrodes). The optimization process for the additional temperature conditions is performed in the same manner as the optimization process for the room temperature condition, but the temperature trend may be additionally considered to determine the optimal parameter value set.

The resistive parameters of the battery (conductivity (ionic conductivity and/or electrical conductivity), reaction rates in positive and negative electrodes) may have a temperature trend that changes linearly with temperature. Therefore, the optimization unit 142 may determine a selected resistive parameter value that satisfies a criterion (e.g., an optimal resistive parameter) and that corresponds to one or more (e.g., each) temperature condition through linear regression analysis on the temperature trend of one or more (e.g., each) resistive parameter.

The optimization unit 142 may first perform filtering to select parameter value sets to be analyzed based on the fitness score in order to analyze the temperature trend. In step S44, the control device 142 may select parameter value sets whose fitness score satisfies a predetermined condition (for example, a condition in which the cost is less than or equal to a reference value) among the parameter value sets generated through the genetic algorithm as temperature trend analysis targets.

If the temperature trend analysis target is selected, the optimization unit 142 may perform linear regression analysis for one or more (e.g., each) resistive parameter using the selected parameter value sets.

The optimization unit 142 may extract conductivity values from parameter value sets selected as temperature trend analysis targets. The optimization unit 142 may derive a function model (see M1 in FIG. 3A) representing the temperature trend of the conductivity through linear regression analysis on the temperature trend of the extracted conductivity values. The optimization unit 142 may calculate the determination coefficient $R^2$ of one or more (e.g., each) conductivity value based on the derived function model of the conductivity. The higher the determination coefficient $R^2$, for example, the closer the determination coefficient $R^2$ is to 1, the higher the fitness of the corresponding parameter value with respect to the function model may be determined.

The optimization unit 142 may extract reaction rate values in the positive electrode from parameter value sets selected as temperature trend analysis targets. The optimization unit 142 may derive a function model (see M2 in FIG. 3B) representing the temperature trend of the reaction rate in the positive electrode through linear regression analysis on the temperature trend of the extracted reaction rate values in the positive electrode. The optimization unit 142 may also calculate the determination coefficient $R^2$ of one or more (e.g., each) reaction rate value in the positive electrode based on the function model of the derived reaction rate in the positive electrode.

The optimization unit 142 may extract reaction rate values in the negative electrode from parameter value sets selected as temperature trend analysis targets. The optimization unit 142 may derive a function model (see M3 in FIG. 3C) representing the temperature trend of the reaction rate in the negative electrode through linear regression analysis on the temperature trend of the extracted reaction rate values in the negative electrode. The optimization unit 142 may also calculate the determination coefficient $R^2$ of one or more (e.g., each) reaction rate value based on the function model of the derived reaction rate in the negative electrode.

The optimization unit 142 may select a selected (e.g., an optimal) parameter value set for one or more (e.g., each) temperature condition based on the determination coefficient $R^2$ of one or more (e.g., each) parameter value. One or more (e.g., each) parameter value set includes parameter values of conductivity (ionic conductivity and/or electrical conductivity), the reaction rates in the positive and negative electrodes, which are resistive parameters. Therefore, the determination coefficient $R^2$ may be calculated for one or more (e.g., each) of the three resistive parameter values included in one or more (e.g., each) parameter value set. The optimization unit 142 may calculate a temperature trend fitness score by combining the determination coefficients $R^2$ of the corresponding three resistive parameter values for one or more (e.g., each) of the multiple parameter value sets selected as the temperature trend analysis target.

For example, the optimization unit 142 may calculate a temperature trend fitness score of the corresponding parameter value set by adding $(R^2)^2$ values of the three resistive parameters included in the same parameter value set. For example, the optimization unit 142 may select a parameter value set that satisfies a criterion, such as a parameter value set with the highest temperature trend fitness score among the corresponding parameter value sets for one or more (e.g., each) temperature condition as the optimal parameter value set.

In some embodiments, for example, the optimization unit 142 may also calculate a temperature trend fitness score of the corresponding parameter value set by adding $(1-R^2)^2$ values of the three resistive parameters included in the same parameter value set. For example, the optimization unit 142 may select a parameter value set that satisfies a criterion, such as a parameter value with the lowest temperature trend fitness score among the corresponding parameter value sets for one or more (e.g., each) temperature condition, as the optimal parameter value set.

The optimization unit 142 may divide the temperature section into a plurality of temperature sections to improve accuracy during linear regression analysis of one or more (e.g., each) resistive parameter and perform linear regression analysis for one or more (e.g., each) of the plurality of temperature sections. For example, a function model may be derived for one or more (e.g., each) temperature section for one or more (e.g., each) resistive parameter. For example, the optimization unit 142 may perform linear regression analysis to find a temperature trend model by dividing one or more (e.g., each) resistive parameter into a section below 10°C and a section above 10°C.

Once an optimal parameter value set is selected for one or more (e.g., each) temperature condition, the optimization unit 142 may set internal parameters for one or more (e.g., each) temperature condition of the battery model using the selected optimal parameter value set. For example, the optimization unit 142 may set internal parameter values for one or more (e.g., each) temperature condition of the battery model using parameter values included in the optimal parameter value set (conductivity value (see OV1 of FIG. 3A), reaction rate value in positive electrode (see OV2 of FIG. 3B), and reaction rate value in negative electrode (see OV3 of FIG. 3C), starting voltages of positive and negative electrodes, maximum lithium ion amounts in positive and negative electrodes). For example, the starting voltages of the positive and negative electrodes, and the maximum lithium ion amounts in the positive and negative electrodes may be values fitted through an optimization process for the first temperature condition (room temperature (25°C)).

When the internal parameter setting of the battery model is completed through the optimization process, the optimization unit 142 may additionally perform a verification simulation for verifying the set internal parameters. The optimization unit 142 may perform a charging simulation at a verification charging rate using the battery model with the set internal parameters. Then, the optimization unit 142 may calculate a verification cost using the aforementioned cost function, and if the verification cost is less than or equal to a predetermined value, it may determine that the current setting of the battery model is appropriate.

If the verification of the battery model is completed, the optimization unit 142 may store the internal parameter values of the battery model optimized through the optimization process in the storage device 11. In addition, the optimization unit (142) may store the optimization result of the battery model in the form of a file in the storage device 11 or display it as a fitting result screen through the display device 13. The optimization result may include the final internal parameter value of the battery model, the final cost, the time required for the optimization process, and the like. In some embodiments, the battery model with the optimized parameter values may be used to evaluate the charging characteristics of the target battery. The evaluation results may be used to evaluate whether the target battery satisfies the desired charging characteristics and whether design modifications (e.g., changes in material, composition, or structure) are necessary. If the evaluation indicates that the target battery does not meet the desired charging characteristics, the battery developer may modify the design of the target battery accordingly. Conversely, if the evaluation indicates that the target battery meets the desired charging characteristics, the battery developer may apply the design information of the target battery to the battery production line to proceed with manufacturing.

When a simulation start command is input through the user input device 12, the simulation unit 143 may perform a charging simulation using the battery model stored in the storage device 11. In some embodiment, information on simulation conditions such as the charging rate and simulation temperature may be input through the user input device 12.

When the simulation is completed, the simulation unit (143) may store the simulation result in the form of a file in the storage device 11 or output it as a simulation result screen through the display device 13.

The control device 14 may include at least one processor for performing the functions of the control device 14 described above (the functions of the battery model generation unit 141, the optimization unit 142, and the simulation unit 143). The processor may refer to a data processing device having a physically structured circuit to perform a function expressed by code or instructions included in a program, such as a microprocessor, a central processing unit (CPU), a processor core, a multiprocessor, an application-specific integrated circuit (ASIC), a field programmable gate array (FPGA), and the like. For example, the control device may be implemented as a CPU that is configured to execute instructions stored in a non-transitory storage medium (e.g., memory).

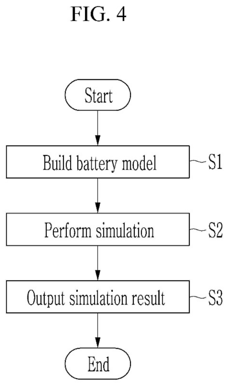

Hereinafter, a battery simulation method will be described with reference to FIG. 4 to FIG. 7. The methods of FIG. 4 to FIG. 7 may be performed by the control device 14 of the battery simulation device 10 described above with reference to FIG. 1.

FIG. 4 depicts a flow diagram of a battery simulation method according to an embodiment.

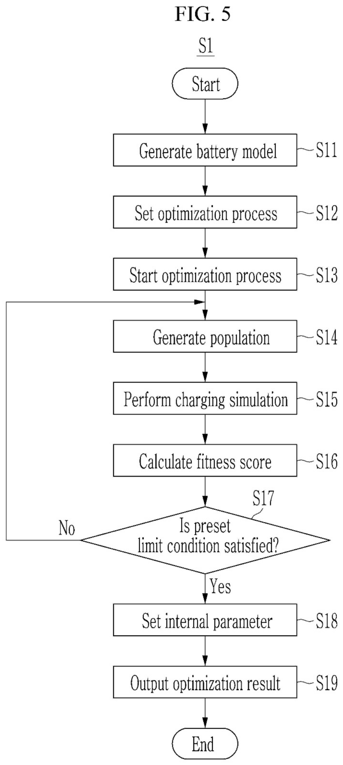

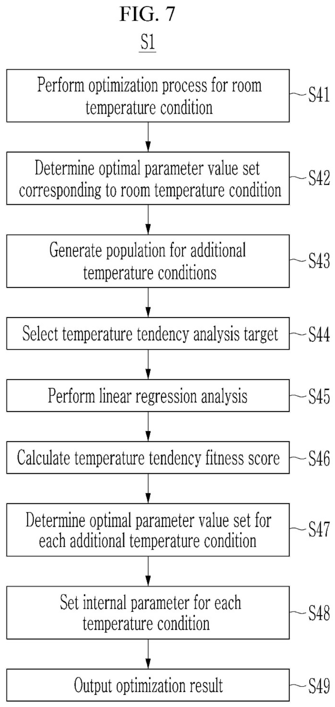

Referring to FIG. 4, the control device 14 may build a battery model to simulate the charging characteristics of the target battery (S1). The method for building the battery model in step S1 will be described in detail with reference to FIG. 5 and FIG. 7.

FIG. 5 depicts a flow diagram of a method for building a battery model according to an embodiment. FIG. 5 illustrates a method for simultaneously searching for all internal parameters.

Referring to FIG. 5, the control device 14 may generate a battery model by modeling the electrochemical characteristics of the target battery (S11). In step S11, the control device 14 may generate a battery model so that internal parameters of the battery model have default values. The default values may be theoretical values calculated based on the design information of the target battery. In step S11, the control device 14 may receive the design information of the target battery through the user input device 12 and generate the battery model based on the received information.

The control device 14 may receive setting information of the optimization process for setting the internal parameters of the battery model through the user input device 12 and set the optimization process based on the received setting information (S12). In step S13, the setting information for the optimization process may include setting information about limit conditions, search methods, and the like. The limit conditions of the optimization process may include conditions for limiting the execution time of the optimization process such as a maximum search time, a maximum number of searches, and a target fitness score. The setting information for the search method of the optimization process may include a search order, a charging rate during the search, a charging rate during verification, and the like.

Thereafter, when the optimization process is started (S13), the control device 13 may generate a population for searching for the internal parameter values (S14). In step S13, when a request to start the optimization process is input through the user input device 12, the control device 13 may start the optimization process. In step S14, when generating a population of a first generation, the control device 13 may randomly generate parameter value sets included in the population. One or more (e.g., each) parameter value set may include parameter values corresponding to the internal parameters of the battery model, respectively. One or more (e.g., each) parameter value set may include parameter values corresponding to one or more (e.g., each) of the conductivity (ionic conductivity and/or electrical conductivity), the reaction rates in the positive and negative electrodes, the maximum lithium ion amounts in the positive and negative electrodes, the starting voltages of the positive and negative electrodes. Unlike the first generation, the control device 14 may generate a population using a genetic algorithm after the second generation.

When the population is generated, the control device 13 may perform a charging simulation using the generated population (S15). In step S15, the control device 14 may set the internal parameters of the battery model using one or more (e.g., each) parameter value set included in the population. Then, the control device 14 may perform a charging simulation using the battery model in which the internal parameters are set. During the charging simulation, simulation conditions (temperature, charging rate, and the like) may be set based on a control input through the user input device 12. As for the simulation condition, a value set as default (for example, a charging rate of 1.5C, a temperature of 25°C) may be used.

The control device 14 may compare the simulation result in step S15 with the charging experiment data of the target battery to calculate a fitness score of one or more (e.g., each) parameter value set (S16). In step S16, the charging experiment data to be compared may be data obtained by performing a charging experiment of the target battery under the same conditions as the simulation conditions. In step S16, the control device 14 may calculate a fitness score of one or more (e.g., each) parameter value set using the cost function of Equation 1 described above.

Once the calculation of fitness scores for one or more (e.g., all) parameter value sets included in the population is completed, the control device 14 may check whether a preset limit condition is satisfied (S17). In step S17, if the time for performing the optimization process exceeds the maximum search time, the control device 14 may determine that the limit condition is satisfied. If the number of times (the number of times a population is newly generated) of repeating the search process during the optimization process exceeds the maximum number of searches, the control device 14 may determine that the limit condition is satisfied. If a parameter value set in which a fitness score (cost) is less than or equal to the target fitness score (target cost) among the parameter value sets included in the population exists, the optimization unit 142 may determine that the limit condition is satisfied.

If the limit condition is not satisfied, the control device 14 may repeat the above-described population generation step S14, charging simulation step S15, and fitness score calculation step S16. When generating the population of the next generation, the control device 14 may select a parameter value set having a minimum fitness score among parameter value sets included in the population of the current generation as the dominant solution, and include the parameter value set selected as the dominant solution in the population of the next generation without changing. The control device 14 may also use mutation and crossover methods to generate new sets of parameter values to be included in the next generation population.

If the control device 14 determines that the limit condition is satisfied, it may select an optimal parameter value set from among the parameter value sets generated so far and use this to set the internal parameters of the battery model (S18). In step S18, the control device 14 may select a parameter value set that satisfies a criterion (e.g., a global minimum having the lowest fitness score among all parameter value sets generated so far), and select the parameter value set that satisfies the criterion (e.g., the selected global minimum) as an optimal parameter value set.

When the search for the optimal parameter value set of the internal parameters of the battery model is completed, the control device 14 may output a search result, for example, an optimization result of the battery model (S19). In step S19, the control device 14 may output the optimization result in a file format or may output it as a result screen through the display device 13.

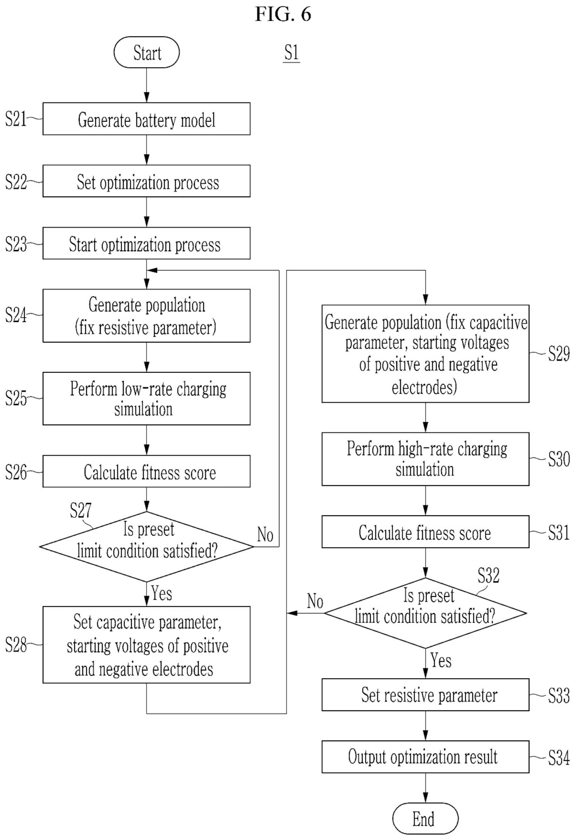

FIG. 6 depicts another flow diagram of a method for building a battery model according to an embodiment. Unlike the method of FIG. 5, the method of FIG. 6 illustrates a case in which resistive parameters and capacitive parameters are divided and searched.

Referring to FIG. 6, the control device 14 may generate a battery model by modeling the electrochemical characteristics of the target battery (S21). Then, the control device 14 may set the optimization process based on the setting information of the optimization process input through the user input device 12 (S22).

Thereafter, when the optimization process starts (S23), the control device 13 may generate a population for first searching for the capacitive parameters, the starting voltages of the positive and negative electrodes among the internal parameters of the battery model (S24). In step S24, the control device 13 may fix the value of the resistive parameters among the internal parameters, and generate a parameter value set included in the population based on (e.g., while) changing the capacitive parameters, the starting voltages of the positive and negative electrodes.

In some embodiments, the control device 13 may perform a low rate (for example, a charging rate of 0.1 C) charging simulation using the generated population (S25). Then, the control device 14 may compare the low rate charging simulation result with the charging experiment data of the target battery to calculate the fitness score of one or more (e.g., each) parameter value set (S26).

The control device 14 may check whether the limit condition Is satisfied (S27), and if the limit condition is not satisfied, the control device 14 may repeat the above-described population generation step S24, charging simulation step S25, and fitness score calculation step S26.

If the control device 14 determines that the limit condition is satisfied, it may select a parameter value set that satisfies a criterion (e.g., an optimal parameter value set) from among the parameter value sets generated so far and use this to set the capacitive parameters, the starting voltages of the positive and negative electrodes of the battery model (S28).

Thereafter, the control device 14 may generate a population to search for the resistive parameters among the internal parameters of the battery model whose parameter values have not yet been fitted (S29). In step S29, the control device 13 may generate the parameter value set included in the population based on (e.g., while) changing the value of the resistive parameter based on (e.g., while) fixing the value of the capacitive parameters, the starting voltages of the positive and negative electrodes among the internal parameters.

In some embodiments, the control device 13 may perform a high rate (for example, a charging rate of 2.5 C) charging simulation using the generated population (S30). Then, the control device 14 may compare the high rate charging simulation result with the charging experiment data of the target battery to calculate the fitness score of one or more (e.g., each) parameter value set (S31).

The control device 14 may check whether the limit condition Is satisfied (S32), and if the limit condition is not satisfied, the control device 14 may repeat the above-described population generation step S29, charging simulation step S30, and fitness score calculation step S31.

If the control device 14 determines that the limit condition is satisfied, it may select an optimal parameter value set from among the parameter value sets generated so far and use this to set the resistive parameters of the battery model (S33).

When the search for the optimal parameter value set of all internal parameters of the battery model is completed, the control device 14 may output a search result, for example, an optimization result of the battery model (S34).

FIG. 7 depicts another flow diagram of a method for building a battery model according to an embodiment. The aforementioned FIG. 5 and FIG. 6 describe methods for fitting internal parameters of a battery model for one temperature condition, while FIG. 7 describes a method for fitting internal parameters of a battery model for a plurality of temperature conditions.

Referring to FIG. 7, the control device 14 may perform an optimization process for room temperature conditions (for example, 25°C) (S41) and determine a seleted (e.g., an optimal) parameter value set corresponding to the room temperature conditions (S42). In step S41, the optimization process may be performed in the same manner as the optimization process with reference to the aforementioned FIG. 5 or FIG. 6. Therefore, in step S42, the optimal parameter value set may correspond to the global minimum determined through the optimization process.

Thereafter, the control device 14 may generate a population for searching an optimal parameter set for a plurality of additional temperature conditions excluding the room temperature condition (S43). In step S43, the control device 14 may generate a population using a genetic algorithm. In step S43, the control device 14 may generate a population based on (e.g., while) fixing the parameter values of the capacitive parameters (the maximum lithium ion amounts in the positive and negative electrodes), the starting voltages of the positive and negative electrodes to the optimal values fitted for the room temperature condition.

The control device 14 may select a temperature trend analysis target from the populations generated in step S43 (S44). In step S44, the control device 14 may select parameter value sets whose fitness score satisfies a predetermined condition (for example, a condition in which the cost is less than or equal to a reference value) among the parameter value sets generated during the optimization process as a temperature trend analysis target.

When the temperature trend analysis target is selected, the control device 14 may perform linear regression analysis on the temperature trend for one or more (e.g., each) resistive parameter using the selected parameter value sets (S45). The control device 14 may calculate the temperature trend fitness score for one or more (e.g., each) parameter value set selected as the temperature trend analysis target based on the function model determined through the linear regression analysis (S46). In step S46, the control device 14 may calculate the determination coefficient ($R^2$) of one or more (e.g., each) resistive parameter value selected as the temperature trend analysis target using the function model derived for one or more (e.g., each) resistive parameter. Then, the control device 14 may calculate the temperature trend fitness score of one or more (e.g., each) parameter value set by combining the determination coefficients ($R^2$) of the resistive parameter values.

The control device 14 may determine the optimal parameter value set for one or more (e.g., each) additional temperature condition based on the temperature trend fitness score of one or more (e.g., each) parameter value set (S47).

The control device 14 may set the internal parameters of the battery model for one or more (e.g., each) temperature condition using the optimal parameter value sets determined in step S42 and step S47 (S48). Then, the control device 14 may output the optimization result of the battery model (S49).

Referring back to FIG. 4, when the building of the battery model is completed by setting the internal parameters as described above, the control device 14 may use the built battery model to perform a simulation of the charging characteristics of the target battery (S2) and output the simulation results (S3).

While this invention has been described in connection with what is presently considered to be practical embodiments, it is to be understood that the invention is not limited to the disclosed embodiments, but, on the contrary, is intended to cover various modifications and equivalent arrangements included within the spirit and scope of the appended claims.

**Description of Symbols**

10: battery simulation device
11: storage device
12: user input device
13: display device
14: control device
141: battery model generation unit
142: optimization unit
143: simulation unit

**Claims**

1.  A battery simulation device (10) comprising
a control device (14) configured to:

    generate a battery model simulating a target battery;
    perform a first charging simulation of the battery model at a first charging rate to set a plurality of capacitive parameters among a plurality of parameters configuring the battery model; and
    perform a second charging simulation of the battery model at a second charging rate different from the first charging rate to set a plurality of resistive parameters among the plurality of parameters.

2.  The battery simulation device (10) of claim 1, wherein the control device (14) is further configured to:

    generate a plurality of parameter value sets including parameter values of the plurality of parameters;
    perform a third charging simulation of the battery model using each parameter value set of the plurality of parameter value sets;
    compare a result of the third charging simulation obtained using each parameter value set of the plurality of parameter values sets with charging experiment data of the target battery to calculate a fitness score of each parameter value set; and

determine selected parameter values of the plurality of parameters based on the fitness score,
particularly wherein the control device (14) is further configured to generate the plurality of parameter value sets using a genetic algorithm.

3. The battery simulation device (10) of claim 2, wherein:

the control device (14) is further configured to calculate the fitness score using a cost function, and
the cost function includes as variables at least one of a voltage error during a span of a charging period, a constant current charging time error, a voltage error during an initial charging period, a current error during a constant voltage charging period, a charging starting voltage error, or a lithium ion concentration error in a negative electrode.

4. The battery simulation device (10) of any of claims 1-3, wherein:

the control device (14) is further configured to:

generate a plurality of first parameter value sets corresponding to the plurality of parameters based on parameter values of the plurality of resistive parameters being fixed;
determine a selected parameter value of at least one of the plurality of capacitive parameters using a first selected parameter value set selected from the plurality of first parameter value sets;
generate a plurality of second parameter value sets corresponding to the plurality of parameters based on parameter values of the plurality of capacitive parameters being fixed using the first selected parameter value set; and
determine a selected parameter value of the plurality of resistive parameters using a second selected parameter value set selected from the plurality of second parameter value sets.

5. The battery simulation device (10) of any of claims 1-4, wherein:

the plurality of capacitive parameters include a maximum lithium ion amount in a positive electrode and a maximum lithium ion amount in a negative electrode, and
the plurality of resistive parameters include a conductivity, a reaction rate in the positive electrode, and a reaction rate in the negative electrode.

6. The battery simulation device (10) of claim 5, wherein:

the plurality of parameters further include a starting voltage of the positive electrode and a starting voltage of the negative electrode, and
the control device (20) is further configured to determine selected parameter values of the starting voltages of the positive electrode and the negative electrode based on performing a charging simulation of the battery model at the first charging rate,
particularly wherein:

the control device (20) is further configured to:

determine theoretical values of the maximum lithium ion amount in the positive electrode and the maximum lithium ion amount in the negative electrode based on design information of the target battery;
determine a search range based on the theoretical values; and
determine values of the maximum lithium ion amount in the positive electrode and the maximum lithium ion amount in the negative electrode included in the plurality of parameter value sets within the search range,

particularly wherein the control device (20) is further configured to limit a value of the reaction rate in the positive electrode according to a value of the reaction rate in the negative electrode when generating the plurality of parameter value sets.

7. The battery simulation device (10) of any of claims 1-6, wherein the control device (20) is further configured to:

generate a plurality of first parameter value sets;

perform charging simulations of the battery model at the first charging rate and the second charging rate under a first temperature condition to determine a first selected parameter value set among the plurality of first parameter value sets; and

determine selected parameter values of the plurality of parameters corresponding to the first temperature condition using the first selected parameter value set.

8. The battery simulation device (10) of claim 7, wherein the control device (20) is further configured to:

generate a plurality of second parameter value sets based on fixing parameter values of the plurality of capacitive parameters using the first selected parameter value set;

perform charging simulations of the battery model at the first charging rate and the second charging rate under a plurality of different temperature conditions to calculate a fitness score for each of the plurality of second parameter value sets;

derive a function model representing a temperature trend of each of the plurality of resistive parameters using the plurality of second parameter value sets;

calculate a temperature trend fitness score of each of the plurality of second parameter value sets using the function model; and

determine selected parameter values of the plurality of parameters corresponding to each of a plurality of temperature conditions based on the fitness score and the temperature trend fitness score.

9. A method for building a battery model for a battery simulation device (10), comprising:

generating a battery model including a plurality of parameters by simulating a target battery;

selecting a plurality of capacitive parameters, a starting voltage of a positive electrode, and a starting voltage of a negative electrode among the plurality of parameters by performing a first charging simulation of the battery model at a first charging rate; and

selecting a plurality of resistive parameters among the plurality of parameters by performing a second charging simulation of the battery model at a second charging rate different from the first charging rate.

10. The method for building the battery model of claim 9, wherein the selecting the plurality of capacitive parameters, the starting voltage of the positive electrode, and the starting voltage of the negative electrode includes:

generating a plurality of first parameter value sets corresponding to the plurality of parameters;

performing the first charging simulation based on changing parameter values of the plurality of parameters using the plurality of first parameter value sets;

comparing a result of the first charging simulation corresponding to each of the plurality of first parameter value sets with charging experiment data of the target battery to select a first selected parameter value set from among the plurality of first parameter value sets; and

determining selected parameter values of the plurality of capacitive parameters, the starting voltage of the positive electrode, and the starting voltage of the negative electrode using the first selected parameter value set.

11. The method for building the battery model of claim 10, wherein the selecting of the plurality of resistive parameters includes:

generating a plurality of second parameter value sets corresponding to the plurality of parameters based on fixing parameter values of the plurality of capacitive parameters, the starting voltage of the positive electrode, and the starting voltage of the negative electrode using the first selected parameter value set;

performing the second charging simulation based on changing parameter values of the plurality of parameters using the plurality of second parameter value sets;

comparing a result of the second charging simulation corresponding to each of the plurality of second parameter value sets with charging experiment data of the target battery to select a second selected parameter value set from among the plurality of second parameter value sets; and

determining selected parameter values of the plurality of resistive parameters using the second selected parameter value set.

12. The method for building the battery model of any of claims 9-11, wherein the first charging rate is lower than the second charging rate,

particularly wherein the generating of the plurality of first parameter value sets and the generating of the plurality of second parameter value sets are performed using a genetic algorithm,
particularly wherein:

the selecting of the first selected parameter value set and the selecting of the second selected parameter value set are performed using a cost function, and
the cost function includes as variables a voltage error during a span of a charging period, a constant current charging time error, a voltage error during an initial charging period, a current error during a constant voltage charging period, a charging starting voltage error, and a lithium ion concentration error in a negative electrode.

13. The method for building the battery model of any of claims 10-12, wherein:

the plurality of capacitive parameters includes a maximum lithium ion amount in a positive electrode and a maximum lithium ion amount in a negative electrode, and
the plurality of resistive parameters includes a conductivity, a reaction rate in the positive electrode, and a reaction rate in the negative electrode.

14. A method for building a battery model for a battery simulation device (10), comprising:

generating a battery model including a plurality of parameters by simulating a target battery;
generating a plurality of first parameter value sets corresponding to the plurality of parameters;
performing a first charging simulation of the battery model under a first temperature condition based on changing parameter values of the plurality of parameters using the plurality of first parameter value sets;
determining a first selected parameter value set corresponding to the first temperature condition among the plurality of first parameter value sets based on a result of the first charging simulation;
generating a plurality of second parameter value sets corresponding to the plurality of parameters based on fixing parameter values of a plurality of capacitive parameters among the plurality of parameters using the first selected parameter value set;
performing a second charging simulation of the battery model under a plurality of temperature conditions different from the first temperature condition based on changing parameter values of the plurality of parameters using the plurality of second parameter value sets; and
determining a second selected parameter value set corresponding to each of the plurality of temperature conditions among the plurality of second parameter value sets based on a result of the second charging simulation.

15. The method for building the battery model of claim 14, wherein the determining of the second selected parameter value set includes:

comparing the result of the second charging simulation with charging experiment data of the target battery to select a plurality of third parameter value sets from among the plurality of second parameter value sets;
deriving a temperature trend function model of each of a plurality of resistive parameters from among the plurality of parameters using the plurality of third parameter value sets;
calculating a temperature trend fitness score of each of the plurality of third parameter value sets using the temperature trend function model; and
determining the second selected parameter value set corresponding to each of the plurality of temperature conditions from among the plurality of third parameter value sets based on the temperature trend fitness score.

FIG. 1

<u>10</u>

14

Control Device

11— Storage Device

141 — Battery Model Generation Unit

12— User Input Device

142 — Optimization Unit

13— Display Device

143 — Simulation Unit

FIG. 2A

## FIG. 2B

FIG. 2C

FIG. 3A

FIG. 3B

FIG. 3C

FIG. 4

```
        ┌─────────┐
        │  Start  │
        └─────────┘
             │
             ▼
   ┌──────────────────────┐
   │  Build battery model │ ~S1
   └──────────────────────┘
             │
             ▼
   ┌──────────────────────┐
   │  Perform simulation  │ ~S2
   └──────────────────────┘
             │
             ▼
   ┌──────────────────────────┐
   │ Output simulation result │ ~S3
   └──────────────────────────┘
             │
             ▼
        ┌─────────┐
        │   End   │
        └─────────┘
```

## FIG. 5

S1

```
         ┌─────────┐
         │  Start  │
         └─────────┘
              │
              ▼
┌──────────────────────────┐
│  Generate battery model  │──── S11
└──────────────────────────┘
              │
              ▼
┌──────────────────────────┐
│  Set optimization process│──── S12
└──────────────────────────┘
              │
              ▼
┌──────────────────────────┐
│ Start optimization process│─── S13
└──────────────────────────┘
              │
    ┌─────────▼──────────────┐
    │                        │
    │   ┌──────────────────────────┐
    └──▶│   Generate population     │──── S14
        └──────────────────────────┘
              │
              ▼
┌──────────────────────────┐
│ Perform charging simulation│─── S15
└──────────────────────────┘
              │
              ▼
┌──────────────────────────┐
│  Calculate fitness score │──── S16
└──────────────────────────┘
              │
              ▼              S17
         ╱ Is preset ╲
  No ◀──╱ limit condition satisfied? ╲
         ╲             ╱
           ╲         ╱
              │ Yes
              ▼
┌──────────────────────────┐
│  Set internal parameter  │──── S18
└──────────────────────────┘
              │
              ▼
┌──────────────────────────┐
│ Output optimization result│─── S19
└──────────────────────────┘
              │
              ▼
         ┌─────────┐
         │   End   │
         └─────────┘
```

EP 4 726 406 A1

## FIG. 6

S1

Start

S21 — Generate battery model

S22 — Set optimization process

S23 — Start optimization process

S24 — Generate population (fix resistive parameter)

S25 — Perform low-rate charging simulation

S26 — Calculate fitness score

S27 — Is preset limit condition satisfied? — No

Yes

S28 — Set capacitive parameter, starting voltages of positive and negative electrodes

S29 — Generate population (fix capacitive parameter, starting voltages of positive and negative electrodes)

S30 — Perform high-rate charging simulation

S31 — Calculate fitness score

S32 — Is preset limit condition satisfied? — No

Yes

S33 — Set resistive parameter

S34 — Output optimization result

End

## FIG. 7

<u>S1</u>

Perform optimization process for room temperature condition — S41

Determine optimal parameter value set corresponding to room temperature condition — S42

Generate population for additional temperature conditions — S43

Select temperature tendency analysis target — S44

Perform linear regression analysis — S45

Calculate temperature tendency fitness score — S46

Determine optimal parameter value set for each additional temperature condition — S47

Set internal parameter for each temperature condition — S48

Output optimization result — S49

| | Europäisches Patentamt European Patent Office Office européen des brevets | **EUROPEAN SEARCH REPORT** | Application Number EP 25 20 7533 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HU Y ET AL: "A technique for dynamic battery model identification in automotive applications using linear parameter varying structures", CONTROL ENGINEERING PRACTICE, ELSEVIER LTD, AMSTERDAM, NL, vol. 17, no. 10, 1 October 2009 (2009-10-01), pages 1190-1201, XP026496900, ISSN: 0967-0661, DOI: 10.1016/J.CONENGPRAC.2009.05.002 [retrieved on 2009-06-12] | 1-13 | INV. G01R31/367 G06F30/20 ADD. G06F119/06 G06F111/10 |
| A | * abstract * * eq. 2, 4, 5, 10, 11 section 2 section 2.1 section 3.1 section 3.2 section 4, par. 1 section 4.1 section 4.2.1, par. 1 section 5, par. 1; figures 1, 3, 7 * ----- -/-- | 14,15 | |

**TECHNICAL FIELDS SEARCHED (IPC)**

G01R
G06F

The present search report has been drawn up for all claims

| Place of search | Date of completion of the search | Examiner |
|---|---|---|
| Munich | 13 February 2026 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 1 of 2

**EUROPEAN SEARCH REPORT**

Application Number

EP 25 20 7533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG YUJIE ET AL: "Optimization of battery charging strategy based on nonlinear model predictive control", ENERGY, ELSEVIER, AMSTERDAM, NL, vol. 241, 10 December 2021 (2021-12-10), XP086938640, ISSN: 0360-5442, DOI: 10.1016/J.ENERGY.2021.122877 [retrieved on 2021-12-10] | 14,15 | |
| A | * abstract * * eq. 1-4; section 1.2 (b) section 2.2.1 section 2.2.2; figures 1, 3, 6; tables 1, 2 * ----- | 1-13 | |
| A | US 11 181 587 B1 (ZITARA TECH INC [US]) 23 November 2021 (2021-11-23) * abstract * * col. 4, 6, 7, 11, 12, 26; figures 2-4 * ----- | 1-15 | TECHNICAL FIELDS SEARCHED (IPC) |

The present search report has been drawn up for all claims

| Place of search | Date of completion of the search | Examiner |
|---|---|---|
| Munich | 13 February 2026 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 7533

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2026

| Patent document cited in search report | | Publication date | Patent family member(s) | | Publication date |
|---|---|---|---|---|---|
| US 11181587 | B1 | 23-11-2021 | CN | 115968447 A | 14-04-2023 |
| | | | EP | 4147060 A1 | 15-03-2023 |
| | | | US | 2021349155 A1 | 11-11-2021 |
| | | | US | 2021349157 A1 | 11-11-2021 |
| | | | US | 2022034974 A1 | 03-02-2022 |
| | | | US | 2023123124 A1 | 20-04-2023 |
| | | | US | 2023213590 A1 | 06-07-2023 |
| | | | US | 2024230787 A1 | 11-07-2024 |
| | | | WO | 2021226505 A1 | 11-11-2021 |

EPO FORM P0459

For more details about this annex : see Official Journal of the European Patent Office, No. 12/82